# EUROPEAN PATENT SPECIFICATION

(11) **EP 0 373 179 B1**
(45) Date of publication and mention of the grant of the patent: **27.10.1993**
(21) Application number: 89901409.6
(22) Date of filing: 19.12.1988
(51) Int. Cl.: G11B 15/62, G11B 5/187

(54) **INLINE MAGNETIC HEAD ASSEMBLY FOR USE IN A CASSETTE LOADED RECORDER**
IN EINEM KASSETTENTONBANDGERÄT VERWENDETER KOPLANARER MAGNETISCHER KOPFZUSAMMENBAU
ENSEMBLE DE TETE MAGNETIQUE EN LIGNE UTILISE DANS UN ENREGISTREUR CHARGE D'UNE CASSETTE

(30) Priority: 28.12.1987 US 138764
(43) Date of publication of application: 20.06.1990
(73) Proprietor: EASTMAN KODAK COMPANY, Rochester, New York 14650 (US)
(72) Inventor: FAVROU, John, Milton, Del Mar, CA 92014 (US); LACEY, Christopher, Allen c/o Eastman Kodak Co., Rochester, New York 14650 (US); BROCK, George, William, La Jolla, CA 92037 (US)
(74) Representative: Blickle, K. Werner, Dipl.-Ing.
(86) International application number: US8804598
(87) International publication number: WO8906425

(56) References cited:
- EP-A- 0 181 263
- US-A- 3 582 917
- FEINWERKTECHNIK & MESSTECHNIK, vol. 88, no. 7, October 1980, München, pages 361-364; H.H. GATZEN: "THEORET. ERMITTLUNG DES KOPFPROFILS EIN. SCH. LESEKOPFES FÜR MAGNETBANDSPEICHER MIT HOH. BANDGESCHW."
- IBM TECHNICAL DISCLOSURE BULLETIN, vol. 23, no. 7A, December 1980, New York, pages 2845-2846; D. LEGROS: "MAGNETIC HEAD"
- IBM TECHNICAL DISCLOSURE BULLETIN, vol. 14, no. 9, February 1972, New York, pages 2631-2632; T.K. CHOW: "BIDIRECTIONAL MAGNETIC HEAD"
- IBM TECHNICAL DISCLOSURE BULLETIN, vol. 24, no. 7A, December 1981, New York, pages 3195-3196; J.L. GROOM JR.: "SPHERICAL MAGNETIC HEADS FOR FLEXIBLEMEDIA"

## Description

### BACKGROUND OF THE INVENTION

### Field of the Invention

This invention relates to the contour of a magnetic head assembly, and in particular to two inline head assemblies that provide improved contact at the magnetic head-magnetic tape interface of a cassette loaded recorder.

The invention, as well as the prior art, will be described with reference to the drawings of which:
Fig. 1 illustrates a magnetic head contour over which the invention provides improvement,
Figs. 2a and 2b illustrate magnetic tape in contact with two inline magnetic head assemblies having contours in accordance with the teaching of the invention under various cassette guiding conditions.

### Description of the Prior Art

The contact between the magnetic head and the magnetic tape is crucial in determining the performance of a magnetic tape recording system. During recording it is essential that the gap of the head, which is the source of the recording flux, be in intimate contact with the tape to effect efficient signal transfer, and during playback intimate contact is essential to provide effective coupling of the magnetic field from the tape to the playback head. While adequate contact is essential at all wavelengths, it is particularly important at short recorded wavelengths due to the well known spacing loss effect which becomes increasingly severe as the wavelength decreases.

To reduce errors due to lift-off, document EP-A-0 181 263 discloses a paired head recording system. This self-cleaning head assembly is characterized by one or more raised head islands with convex top surfaces and sloped sides. In the preferred embodiment, the recording medium path is multi-angled, passing over one or more non-conducting outrigger islands which clean and steady the tape. All islands are substantially identical in size and contour to the head islands. The recording medium is drawn over a first outrigger island followed by the write and read head and a final outrigger island.

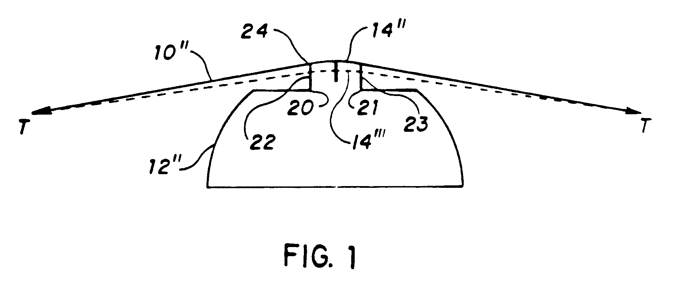

An improved head contour eliminates problems of increase in size of the contact region and "flying" of the tape. Referring to Fig. 1, a radiused head surface 12'' is provided with shoulders 20, 21 which define the head-tape contact region 14''. The tape 10'' engages the contact region 14'' at the edge of the plane 22 comprising one face of the shoulder 20. It remains in contact with the head while traversing the region 14'', and exits from the contact region 14'' at the plane 22 which comprises a face of the shoulder 23. The edge 24 at which the tape engages the contact region 14'' skives any entrained air which may be adherent to the tape prior to the tape contacting the head at 14''. Removal of this air layer significantly improves head/tape contact over the entire surface of the head by elimination of the air film required to support tape "flying".

Additionally, the contour of the head surface of Fig. 1 is such that the tape exerts constant pressure at all points of the head/tape contact region. The industry practice has been to set the radius of the head at about 0.125'', but, in general, at this radius the pressure of the tape is not uniformly distributed over the head surface. Experience shows that the radius and the contour of the head change as the head wears due to tape abrasiveness. It will be appreciated that in areas where the contact region experiences "high" pressure the head will wear faster than it will in areas that experience "low" pressure. The head will wear so as to assume a contour where the pressure is uniform across the entire surface. However, if the head contour is initially shaped so that all points of contact of the head surface are under identical pressure during normal operation, and the sides of the head structure are parallel to the pressure direction, then head wear will be uniform over the life of the head and the contour at the region of contact 14''' will maintain the contour of the original region of contact 14''. The optimum contour has been designated as a "constant area profile" surface since it provides a constant area head/tape contact region over the life of the head.

### SUMMARY OF THE INVENTION

In a recorder having two inline heads, such as a record head followed by a reproduce head, it is necessary to insure adequate tape wrap angle at the transducing element of each head. Because the tape is spanned between the two inline heads, the tape leaves the apex of one head at a zero wrap angle and arrives at the apex of the second head with a zero wrap angle. A recoring system according to the invention is defined in Claim 1.

### DESCRIPTION OF THE INVENTION

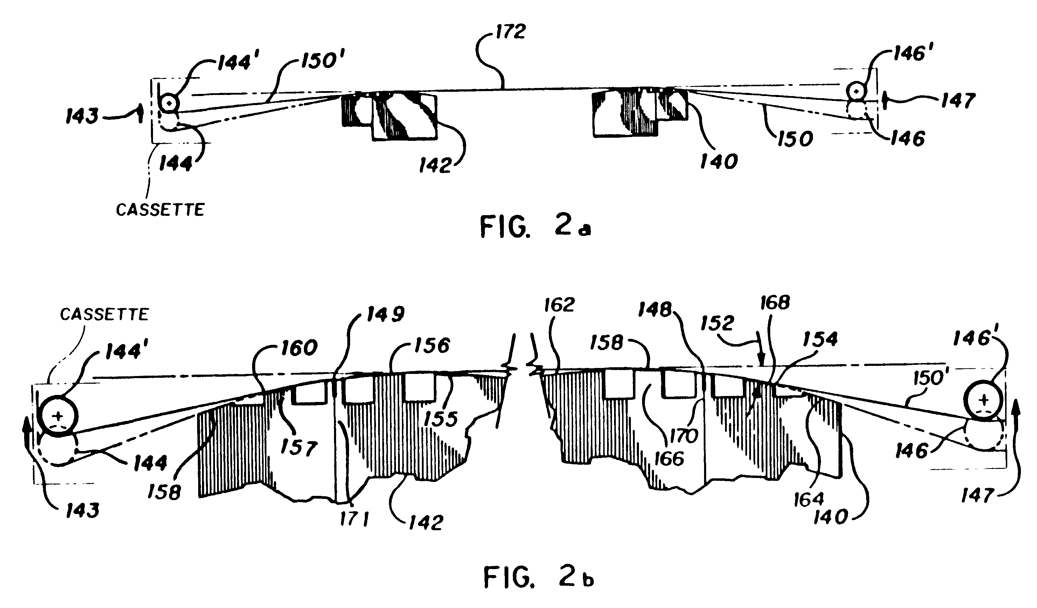

An embodiment of the invention, where more than one head is located in the tape path as, for example, the case of separate record and playback heads, is illustrated in Figs. 2a and 2b. Referring to Fig. 2a., guides 144, 146 are shown in their nominal positions with tape 150 contacting both head assembly 140, and also a second head assembly 142. If the guides 144, 146 are displaced in the direction of arrows 143, 147 to positions 144', 146', the tape path 150 is displaced to tape path 150'. By referring to Fig. 2b, where the components of Fig. 2a are shown in greater detail, the effects of the cassette guide displacements may be more clearly appreciated. Considering the head structure 140, the two pairs of outriggers 162, 166 and 168, 164 are provided. A transducing element 148 is located on a land 170. It will be noted that the tape span 172 (Fig. 2a) between the head assemblies 140, 142 causes the tape to enter and to leave the outrigger 166 (Fig. 2b) at almost zero wrap angles. Resultantly, the normal force of the tape 150' against the outrigger 166 is very low and if a transducing element were located on the outrigger 166 the contact pressure would be insufficient to ensure reliable performance. The transducing element 152, therefore, is located on the land 170 where there is sufficient wrap and attendant normal force due to the tape first contacting either outrigger 162 or 166 and later contacting either outrigger 168 or 164, to guarantee adequate tape to transducing element contact. It will be appreciated that because of the symmetry of the placement of the head assemblies 140, 142, that a similar argument is applicable to the location of the magnetic element 149 on the head assembly 142.

The sides of the outriggers and the center lands provide edges for skiving air particles adherent to the tape approaching the important contact area, as previously described. It will be noted that the symmetry of the head structure insures the air skiving is effective for either direction of tape travel.

The teachings of the invention may be applied to the magnetic head assemblies of other magnetic recorders not employing cassettes, such as reel to reel recorders or loop recorders not having precisely positioned tape guiding elements.

## Claims

1. A recording system with first and second magnetic head assemblies (140, 142) comprises:
a) means for transporting a recording medium (150) over said first (140) and said second (142) magnetic head assemblies in sequence, said means including a span (172) of said medium between said first and said second head assemblies (140, 142),
b) first transducing element (148) and second transducing element (149) located on first and second lands (170, 171) of said first and second head assemblies (140, 142) respectively,
c) first outrigger means (164, 168) for contacting said recording medium (150) before said recording medium (150) contacts said first land (170) having said first transducing element (148) located thereon,
d) second outrigger means (157, 158) for contacting said recording medium (150) after said recording medium (150) contacts said second land (171) having said second transducing element (149) located thereon,
said recording system is characterized by: means, external to said first and to said second magnetic head assemblies (140, 142), for guiding (144, 146) said recording medium (150) at nominal wrap angles relative to said first and said second transducing elements (148, 149),
at least one additional outrigger means (162, 166; 155, 156) between said said first and second lands (170, 171) for contacting said recording medium, forming a part of at least one of said head assemblies,
said first outrigger means (164, 168), and said first land (170) comprise the contour of a first constant area profile, and said second outrigger means (157, 158) and said second land (171) comprise the contour of a second constant area profile, while said additional outrigger means comprises the contour of at least one of said first and second area profiles.

2. The recording system as set forth in claim 1, wherein said additional outrigger means (162, 166; 155, 156) comprises: third outrigger means (162, 166) for contacting said recording medium (150) after said recording medium (150) contacts said first land (170) having said first transducing element (148) located thereon, wherein said outrigger means (162, 166) supports one end of said span (172) of said medium (150),
fourth outrigger means (155, 156) for contacting said recording medium (150) before said recording medium (150) contacts said second land (171) having said second transducing element (179) located thereon, wherein said outrigger means (155, 156) supports the other end of said span (172) of said medium (150).

3. The recording system of claim 2, wherein at least one of said first, second, third or fourth outrigger means provides a pair of outriggers.

4. The recording system of claim 2, wherein the apex of said first magnetic head assembly (140) is located on said third outrigger means (162, 166).

5. The recording system of claim 2, wherein the apex of said second magnetic head assembly (142) is located on said fourth outrigger means (155, 156).

6. The recording system of claims 1 to 5, wherein said recording medium (150) is located in a removable cassette.

7. The recording system of claim 6, wherein said means, external to said first and second magnetic head assemblies (140, 142), for guiding said recording medium are guides (144, 146) within said cassette.

## Patentansprüche

1. Aufzeichnungssystem mit einer ersten und einer zweiten Magnetkopf-Baugruppe (140, 142), das
a) eine Einrichtung umfaßt, die ein Aufzeichnungsmedium (150) nacheinander über die erste (140) und die zweite (142) Magnetkopf-Baugruppe transportiert und einen sich zwischen der ersten und der zweiten Magnetkopf-Baugruppe (140, 142) erstreckenden Bereich (172) aufweist,
b) ein erstes Wandlerelement (148) und ein zweites Wandlerelement (149) besitzt, wobei diese Elemente auf einem ersten und einem zweiten Vorsprung (170, 171) der ersten bzw. zweiten Magnetkopf-Baugruppe (140 bzw. 142) angeordnet sind,
c) eine erste Gruppe von Vorsprungselementen (164, 168) enthält, die mit dem Aufzeichnungsmedium (150) in Berührung gelangen, bevor das Aufzeichnungsmedium (150) mit dem das erste Wandlerelement (148) aufweisenden ersten Vorsprung (170) in Berührung kommt, und
d) eine zweite Gruppe von Vorsprungselementen (157, 158) enthält, die mit dem Aufzeichnungsmedium (150) in Berührung gelangen, nachdem dieses mit dem das zweite Wandlerelement (149) aufweisenden zweiten Vorsprung (171) in Berührung gekommen ist,
**dadurch gekennzeichnet,** daß außerhalb der ersten und der zweiten Magnetkopf-Baugruppe (140, 142) Mittel (144, 146) vorgesehen sind, die das Aufzeichnungsmedium (150) in einem Soll-Umschlingungswinkel relativ zu dem ersten und dem zweiten Wandlerelement (148, 149) führen,
daß mindestens ein weiteres Vorsprungselement (162, 166; 155, 156) zwischen dem ersten und dem zweiten Vorsprung (170, 171) für den Kontakt mit dem Aufzeichnungsmedium vorgesehen ist, wobei dieses Vorsprungselement einen Teil mindestens einer der Magnetkopf-Baugruppen bildet, und
daß die erste Gruppe von Vorsprungselementen (164, 168) und der erste Vorsprung (170) eine Kontur mit einer ersten Flächenprofilkonstante besitzen und die zweite Gruppe von Vorsprungselementen (157, 158) und der zweite Vorsprung (171) eine Kontur mit einer zweiten Flächenprofilkonstante besitzen, während das weitere Vorsprungselement eine Kontur mit mindestens einer der beiden Flächenprofilkonstanten besitzt.

2. Aufzeichnungssystem nach Anspruch 1, dadurch gekennzeichnet, daß die weiteren Vorsprungselemente (162, 166; 155, 156) ein drittes Vorsprungselement (162, 166) umfassen, das mit dem Aufzeichnungsmedium (150) in Berührung gelangt, nachdem dieses mit dem das erste Wandlerelement (148) aufweisenden ersten Vorsprung (170) in Berührung gekommen ist, und daß auf diesem Vorsprungselement (162, 166) das eine Ende des Bereichs (172) des Aufzeichnungsmediums (150) gelagert ist, und
ein viertes Vorsprungselement (155, 156) mit dem Aufzeichnungsmedium (150) in Berührung gelangt, bevor das Aufzeichnungsmedium (150) mit dem das zweite Wandlerelement (179) aufweisenden zweiten Vorsprung (171) in Berührung gelangt ist, und auf diesem Vorsprungselement (155, 156) das andere Ende des Bereichs (172) des Aufzeichnungsmediums (150) gelagert ist.

3. Aufzeichnungssystem nach Anspruch 2, dadurch gekennzeichnet, daß mindestens eines der ersten, zweiten, dritten oder vierten Vorsprungselemente als Vorsprungspaar ausgebildet ist.

4. Aufzeichnungssystem nach Anspruch 2, dadurch gekennzeichnet, daß der Scheitelpunkt der ersten Magnetkopf-Baugruppe (140) auf dem dritten Vorsprungselement (162, 166) angeordnet ist.

5. Aufzeichnungssystem nach Anspruch 2, dadurch gekennzeichnet, daß der Scheitelpunkt der zweiten Magnetkopf-Baugruppe (142) auf dem vierten Vorsprungselement (155, 156) angeordnet ist.

6. Aufzeichnungssystem nach den Ansprüchen 1 bis 5, dadurch gekennzeichnet, daß sich das Aufzeichnungsmedium (150) in einer entfernbaren Kassette befindet.

7. Aufzeichnungssystem nach Anspruch 6, dadurch gekennzeichnet, daß die außerhalb der ersten und der zweiten Magnetkopf-Baugruppe (140, 142) liegenden Mittel Führungsmittel (144, 146) sind, die das Aufzeichnungsmedium in der Kassette führen.

## Revendications

1. Système d'enregistrement ayant des premier et second ensembles (140, 142) à tête magnétique, comprenant :
a) un dispositif de transport d'un support d'enregistrement (150) sur un premier (140) et un second (142) ensemble à tête magnétique successivement, le dispositif ayant une partie intermédiaire (172) du support placée entre le premier et le second ensemble à tête (140, 142),
b) un premier élément transducteur (148) et un second élément transducteur (149) placés sur une première et une seconde portée (170, 171) du premier et du second ensemble à tête (140, 142) respectivement,
c) un premier dispositif à saillie (164, 168) destiné à être au contact du support d'enregistrement (150) avant que ce support (150) ne vienne au contact de la première portée (170) qui possède le premier élément transducteur (148) positionné sur elle,
d) un second dispositif à saillie (157, 158) destiné à être au contact du support d'enregistrement (150) après que ce support (150) a été au contact de la seconde portée (171) ayant le second élément transducteur (149) positionné sur elle,
le système d'enregistrement étant caractérisé par :
un dispositif externe au premier et au second ensemble (140, 142) à tête magnétique et destiné à guider (144, 146) le support d'enregistrement (150) avec des angles nominaux d'enveloppement par rapport au premier et au second élément transducteur (148, 149),
au moins un dispositif supplémentaire à saillie (162, 166 ; 155, 156) placé entre la première et la seconde portée (170, 171) afin qu'il soit au contact du support d'enregistrement et formant une partie de l'un au moins des ensembles à tête,
le premier dispositif à saillie (164, 168) et la première portée (170) ayant le contour d'un premier profil de surface constante, et le second dispositif à saillie (157, 158) et la seconde portée (171) ayant le contour d'un second profil de surface constante, alors que le dispositif supplémentaire à saillie forme le contour de l'un au moins des premier et second profils de surface.

2. Système d'enregistrement selon la revendication 1, dans lequel le dispositif supplémentaire à saillie (162, 166 ; 155, 156) comprend un troisième dispositif à saillie (162, 166) destiné à être au contact du support d'enregistrement (150) après que ce support (150) a été au contact de la première portée (170) sur laquelle est placé le premier élément transducteur (148), et le dispositif à saillie (162, 166) supporte une première extrémité de la partie intermédiaire (172) du support (150), et
un quatrième dispositif à saillie (155, 156) destiné à être au contact du support d'enregistrement (150) avant que ce support (150) ne soit au contact de la seconde portée (171) sur laquelle est placé le second élément transducteur (179), ce dispositif à saillie (155, 156) supportant l'autre extrémité de la partie intermédiaire (172) du support (150).

3. Système d'enregistrement selon la revendication 2, dans lequel l'un au moins des premier, second, troisième et quatrième dispositifs à saillie forme une paire de saillies.

4. Système d'enregistrement selon la revendication 2, dans lequel le sommet du premier ensemble (140) à tête magnétique est placé sur le troisième dispositif à saillie (162, 166).

5. Système d'enregistrement selon la revendication 2, dans lequel le sommet du second ensemble (142) à tête magnétique est placé sur le quatrième dispositif à saillie (155, 156).

6. Système d'enregistrement selon les revendications 1 à 5, dans lequel le support d'enregistrement (150) est placé dans une cassette amovible.

7. Système d'enregistrement selon la revendication 6, dans lequel ledit dispositif externe au premier et au second ensemble (140, 142) à tête magnétique et destiné à guider le support d'enregistrement est constitué par des guides (144, 146) placés dans la cassette.
